# EUROPÄISCHE PATENTSCHRIFT

(11) **EP 2 978 594 B1**
(45) Veröffentlichungstag und Bekanntmachung des Hinweises auf die Patenterteilung: **04.01.2017**
(21) Anmeldenummer: 14707130.2
(22) Anmeldetag: 26.02.2014
(51) Int. Cl.: B29D 23/18, B29C 49/06

(54) **LEITUNGSRESONATOR**
CONDUIT RESONATOR
RÉSONATEUR DE CONDUIT

(30) Priorität: 26.03.2013 DE 102013103078
(43) Veröffentlichungstag der Anmeldung: 03.02.2016
(73) Patentinhaber: ContiTech MGW GmbH, 34346 Hannoversch-Münden (DE)
(72) Erfinder: BORNEMANN, Axel, 37191 Katlenburg-Lindau (DE); BAVOUX, Charles, 61462 Königstein (DE); SCHULTE, Bernhard, 33449 Langenberg (DE); HENSEL, Knut, 04655 Kohren-Sahlis (DE)
(74) Vertreter: Finger, Karsten
(86) Internationale Anmeldenummer: PCT/EP2014/053681
(87) Internationale Veröffentlichungsnummer: WO 2014/154426

(56) Entgegenhaltungen:
- DE-A1- 3 942 701
- DE-A1-102004 049 446
- DE-A1-102008 016 690
- JP-A- S5 330 660
- US-A- 5 806 480

## Beschreibung

Die Erfindung betrifft ein Verfahren zum Herstellen eines aus mehreren Kunststoffbauteilen bestehenden im Wesentlichen rohrförmigen Leitungsresonators, welcher ein oder mehrere innerhalb eines rohrförmigen Hohlkörpers angeordnete und mit dem Hohlkörper verbundene rohrförmige Formteile aufweist.

Resonatoren in Fluidleitungen sind zur Vermeidung unangenehmer akustischer Emissionen bei Schwingungen des Fluids in der Fluidleitung seit langem bekannt und im Einsatz. Sie werden heute meist aus Kunststoffen aufgebaut, wobei vor allem Spritzgießteile, aber auch Blasformteile zum Einsatz kommen. Spritzgießteile haben den Nachteil, dass die Resonatoren aus mehreren Einzelteilen bestehen und somit recht aufwendig montiert oder verschweißt werden müssen. Blasformen ist dagegen ein relativ preiswertes Herstellverfahren, so dass zunehmend der Einsatz von Blasformteilen angestrebt wird.

Die DE 102008016690 A1 zeigt einen gattungsgemäßen Resonator, bei dem beide Resonatorteile als Blasformteile ausgebildet sind. Die Teile weisen jeweils einen Bund auf und sind an diesen Bunden luftdicht miteinander verbunden.

Die hier offenbarte technische Lehre lässt nur Resonatoren mit nur einer Resonanzkammer zu. Diese einzige Kammer ist mittels eines Ringspaltes (19) mit der eigentlichen Fluidleitung verbunden. Zwar zeichnet sich diese Lösung durch große Einfachheit aus, ist jedoch in ihren Einsatzmöglichkeiten nur beschränkt, da Mehrkammersysteme nicht ohne weiteren Aufwand realisierbar sind.

In der US 5,806,480 ist eine Fluidleitung offenbart, die in einem Längsschnitt zwei ineinander angeordnete Rohre aufweist, zwischen denen eine das innere Rohr umhüllende Kammer angeordnet ist. Dabei kommuniziert diese Kammer über Öffnungen, die in das Innenrohr eingearbeitet sind, mit dem Inneren des Innenrohrs. Für die Herstellung dieses Rohrstücks wird zunächst das Innenrohr spritzgeformt. Anschließend wird mittels eines Extrudierverfahrens ein Rohling für das Außenrohr hergestellt und so gebogen, dass dieser das Innenrohr umhüllt. Anschließend wird der Außenrohrrohling mittels eines Blasformverfahrens umgeformt, um das Außenrohr herzustellen.

Für die Biegung, den Blasformvorgang und die Befestigung des Außenrohrs an dem Innenrohr gestaltet sich das Verfahren recht aufwendig und es ist ein kompliziert aufgebautes Werkzeug erforderlich, da das gesamte gebogen Leitungsstück in das Werkzeug einlegbar sein muss (s. Fig. 3 der US 5,806,480), dementsprechend für jedes Leitungsstück ein eigenes Werkzeug vorgesehen werden muss und da der Blasformschritt trotz der Verbindungsöffnungen in Bezug auf den Formerhalt des Innenteils nicht sehr genau definiert ist.

Der Erfindung liegt die Aufgabe zugrunde, eine Fluidleitung mit einem Resonator der eingangs geschilderten Art in einer verbesserten Ausführungsform zu schaffen, der auf einfache Weise herstellbar ist.

Gelöst wird diese Aufgabe durch die Merkmale des Hauptanspruchs. Weitere vorteilhafte Ausbildungen sind in den Unteransprüchen offenbart.

Dabei wird in einem ersten Formprozess das Formteil mit einem Spritzgussverfahren in einem einen Innendorn aufweisenden Außenwerkzeug hergestellt und der Innendorn im weiteren Prozess mitgeführt, wobei nach Durchführung des ersten Formschrittes das Formteil in einem zweiten Formschritt mit seinem Innendorn als Innenwerkzeug dient, wobei in dem zweiten Formschritt der Hohlkörper zwischen das Formteil und ein umgebendes Außenwerkzeug gespritzt wird und danach der Hohlkörper durch ein Blasformverfahren zur Anlage an die Innenwandung des Außenwerkzeugs und an die Außenwandung des Formteils umgeformt und mit letzterem teilweise verbunden wird.

Dies ermöglicht eine beliebige Formgebung für den Hohlkörper und damit seine Anpassung auf verschiedene der Resonanzen des Fluidsystems und verschiedenen Anpassungen des Hohlraumes zwischen Formteil und Hohlkörper. Die Genauigkeit der Herstellung hinsichtlich dieses Volumens ist sehr wichtig, da hiermit die akustische Wirksamkeit maßgebend beeinflusst wird.

Das Formteil, d.h. das Innenteil und das Außenteil des Resonators, d.h. also der Hohlkörper sind damit hochgenau zu einem integrierten Bauteil zusammengefügt, welches direkt und ohne weitere Verbindungsschritte in die Fluidleitung eingebaut werden kann. Damit ist einerseits die Montage des Resonators vereinfacht, andererseits auch die Gefahr von Undichtigkeiten durch Montage- oder Schweißfehler eliminiert.

Der Kerngedanke der Erfindung ist damit die verfahrenstechnische Umsetzung zweier Prozessschritte/-verfahren in ein verkettetes Verfahren und das Einbringen eines Innenteils in einen eng tolerierten volumenhaltigen Körper, der je nach Akustikanforderung angepasst werden kann.

Während die im Stand der Technik durch die DE 102008016690 A1 und die US 5,806,480 offenbarten Resonatoren nicht druckbeständig sind und daher nur in der Luftansaugung (air intake system) genutzt werden können, also üblicherweise Anwendung finden zwischen Luftfilter und Sauganlage, ist der erfindungsgemäße Resonator druckstabil und temperaturbeständig und für die Anwendung auf der Druckseite (Heißseite) an einem Einbauort zwischen Turbolader und Kühler geeignet.

Eine vorteilhafte Weiterbildung besteht darin, dass bei dem Verfahren mindestens zwei Leitungsresonators mit jeweils zwei Formteilen und zwei mit dem Formteil verbundenen Hohlkörpern in einem Verfahrensablauf hergestellt werden. Dies vereinfacht das Verfahren, reduziert die Herstell- und Rüstkosten und lässt damit die Herstellung preiswerter durchführbar werden.

Die erfindungsgemäße Lösung besteht also in der besonderen Integration des Spritzgieß- und des Blow-molding-Verfahrens, so dass bisher übliche nachfolgende Prozesse, wie z.B. Schweißen nicht mehr notwendig sind. Lediglich das Entbutzen bzw. Entgraten, die Druckprüfung schließen sich noch an.

Anhand eines Ausführungsbeispiels soll die Erfindung näher erläutert werden. Es zeigen
- Fig. 1a-c: einen erfindungsgemäß hergestellten rohrförmigen Leitungsresonator im Zusammenbau und in seinen Einzelteilen
- Fig. 2: einen Teil aus einer Leitung mit einem erfindungsgemäß hergestellten Leitungsresonator
- Fig. 3: eine Herstellanlage zur Durchführung des erfindungsgemäßen Verfahrens als Prinzipskizze

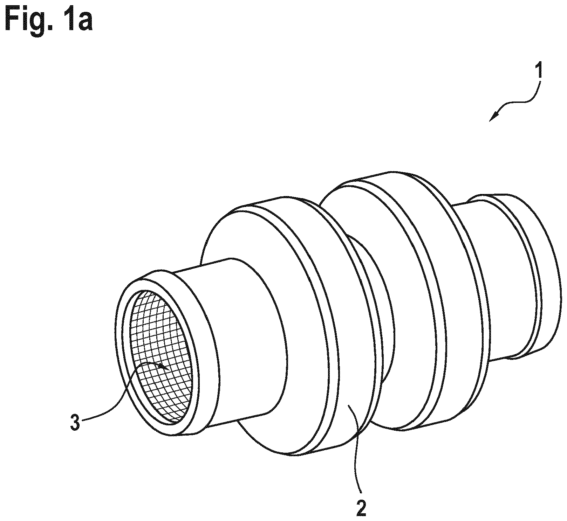

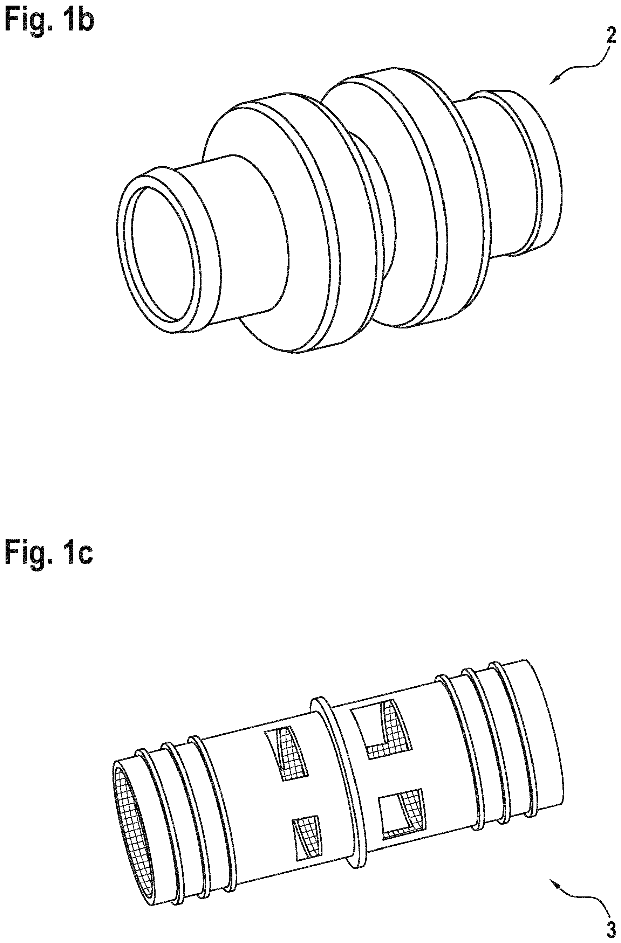

Fig. 1a-c zeigt einen erfindungsgemäß hergestellten rohrförmigen Leitungsresonator 1 für eine Fluidleitung, der ein innerhalb eines rohrförmigen Hohlkörpers 2 angeordneten und mit dem Hohlkörper verbundenes rohrförmiges Formteil 3. Fig. 1a zeigt dabei den Leitungsresonator 1 im fertigen Zustand, Fig. 1b den im zweiten Formschritt durch Blasformen hergestellten Hohlkörper 2 als Einzelteil und Fig. 1c das im ersten Formschritt durch ein Spritzgussverfahren hergestellte Formteil 3 als Einzelteil.

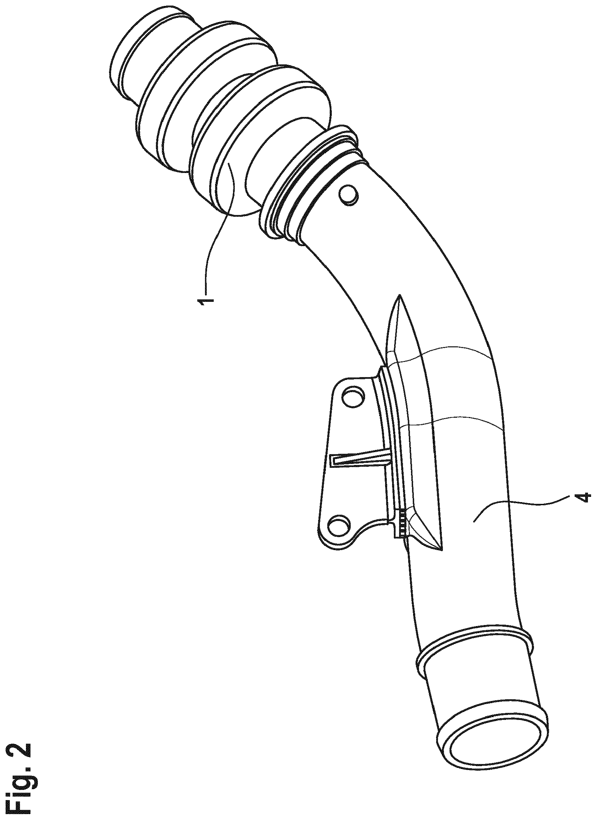

Fig. 2 zeigt einen Teil aus einer Leitung 4 zwischen einem Turbolader und einem Kühler eines hier nicht näher dargestellten Motors für ein Kraftfahrzeug mit einem erfindungsgemäß hergestellten Leitungsresonator 1.

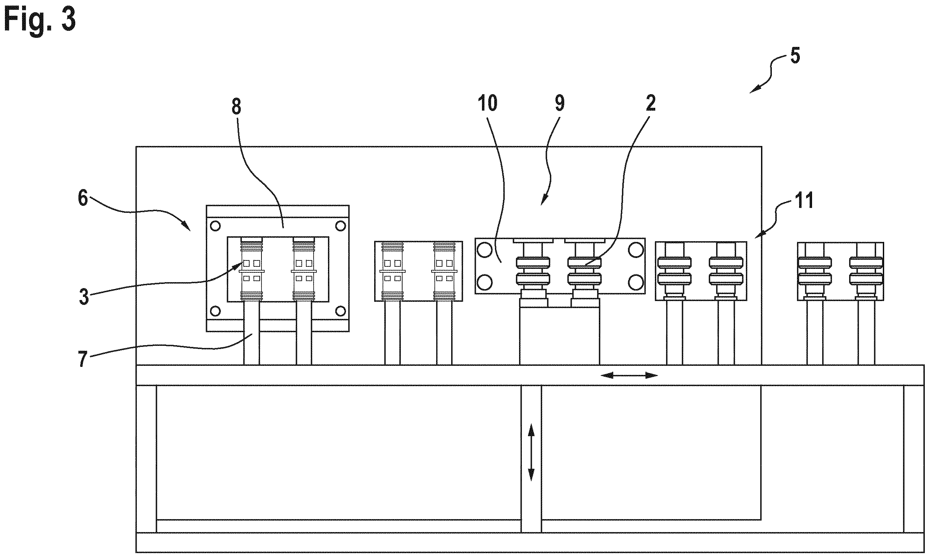

Fig. 3 zeigt als Prinzipskizze eine Herstellanlage 5 zur Durchführung des erfindungsgemäßen Verfahrens. In einer ersten Formstation 6 wird dort in einem ersten Formschritt das Formteil 3 mit einem Spritzgussverfahren in einem einen Innendorn 7 aufweisenden Außenwerkzeug 8 hergestellt. In einer zweiten Formstation 9, in der das Formteil 3 mit seinem Innendorn 7 als Innenwerkzeug dient, wird in einem zweiten Formschritt der Hohlkörper 2 zwischen das Formteil 3 und ein umgebendes Außenwerkzeug 10 gespritzt wird und danach der Hohlkörper durch ein Blasformverfahren zur Anlage an die Innenwandung des Außenwerkzeugs 10 und an die Außenwandung des Formteils umgeformt. Es folgen in weiteren Stationen ein Entgraten 11 und die Ausgabe des fertigen Leitungsresonators.

### Bezugszeichenliste

### (Teil der Beschreibung)

- 1: Leitungsresonator
- 2: Hohlkörper
- 3: Formteil
- 4: Leitung
- 5: Herstellanlage
- 6: Erste Formstation
- 7: Innendorn
- 8: Außenwerkzeug Spritzguss
- 9: Zweite Formstation
- 10: Außenwerkzeug Blasformung
- 11: Entgrat-Station

## Patentansprüche

1. Verfahren zum Herstellen eines aus mehreren Kunststoffbauteilen bestehenden im Wesentlichen rohrförmigen Leitungsresonators (1), welcher ein oder mehrere innerhalb eines rohrförmigen Hohlkörper (2) angeordnete und mit dem Hohlkörper verbundene rohrförmige Formteile (3) aufweist, wobei in einem ersten Formschritt das Formteil (3) mit einem Spritzgussverfahren in einem einen Innendorn (7) aufweisenden Außenwerkzeug (8) hergestellt wird, **dadurch gekennzeichnet, dass** danach das Formteil (3) in einem zweiten Formschritt mit seinem Innendorn (7) als Innenwerkzeug dient, wobei in dem zweiten Formschritt der Hohlkörper (2) zwischen das Formteil (3) und ein umgebendes Außenwerkzeug (10) gespritzt wird und danach der Hohlkörper (2) durch ein Blasformverfahren zur Anlage an die Innenwandung des Außenwerkzeugs (10) und an die Außenwandung des Formteils (3) umgeformt und mit letzterem teilweise verbunden wird.

2. Verfahren nach Anspruch 1, bei dem mindestens zwei Leitungsresonatoren mit jeweils zwei Formteilen und zwei mit dem Formteil verbundenen Hohlkörpern in einem Verfahrensablauf hergestellt werden.

## Claims

1. Method for producing a substantially tubular conduit resonator (1) consisting of a plurality of plastic components, said resonator having one or more tubular moldings (3) arranged inside a tubular hollow body (2) and connected to the tubular hollow body, wherein, in a first molding step, the molding (3) is produced by means of an injection molding process in an outer tool (8) having an inner mandrel (7), **characterized in that**, in a second molding step, the molding (3) then serves with its inner mandrel (7) as an inner tool, wherein, in the second molding step, the hollow body (2) is injected between the molding (3) and a surrounding outer tool (10), and the hollow body (2) is then reshaped by a blow molding process so as to rest on the inner wall of the outer tool (10) and on the outer wall of the molding (3) and is partially connected to the latter.

2. Method according to Claim 1, in which at least two conduit resonators, each having two moldings and two hollow bodies connected to the molding, are produced in a single procedure.

## Revendications

1. Procédé de fabrication d'un résonateur de conduit (1) de forme essentiellement tubulaire constitué de plusieurs composants en plastique, qui présente une ou plusieurs pièces moulées de forme tubulaire (3) disposées à l'intérieur d'un corps creux de forme tubulaire (2) et connectées au corps creux, la pièce moulée (3), dans une première étape de moulage, étant fabriquée avec un procédé de moulage par injection dans un outil extérieur (8) présentant un mandrin intérieur (7), **caractérisé en ce qu'**ensuite, la pièce moulée (3), dans une deuxième étape de moulage, sert d'outil intérieur avec son mandrin intérieur (7), le corps creux (2), dans une deuxième étape de moulage, étant injecté entre la pièce moulée (3) et un outil extérieur périphérique (10) et ensuite le corps creux (2) étant formé par un procédé de moulage par soufflage pour l'application contre la paroi intérieure de l'outil extérieur (10) et contre la paroi extérieure de la pièce moulée (3) et étant connecté en partie à cette dernière.

2. Procédé selon la revendication 1, dans lequel au moins deux résonateurs de conduit sont à chaque fois fabriqués avec deux pièces moulées et deux corps creux connectés à la pièce moulée dans un déroulement de procédé.
